# DEMANDE DE BREVET EUROPEEN

(11) **EP 4 615 084 A1**
(43) Date de publication de la demande: **10.09.2025**
(21) Numéro de dépôt: 24305325.3
(22) Date de dépôt: 04.03.2024
(51) Int. Cl.: H04W 64/00, H04W 88/08

(54) **PROCÉDÉ, SYSTÈME ET STATION DE BASE POUR LA CARACTÉRISATION D'APPAREILS CELLULAIRES**

(71) Demandeur: BULL SAS, 78340 Les Clayes-Sous-Bois (FR)
(72) Inventeur: CHARTON, Philippe, 13100 Aix-en-Provence (FR)
(74) Mandataire: IPAZ

(57) **Abrégé**

L'invention concerne un procédé (100) de caractérisation d'appareils cellulaires, ledit procédé comprenant les étapes suivantes pour chaque appareil cellulaire :
- allocation (106), d'au moins un créneau de communication dédié comprenant chacun un horaire de communication et une fréquence de communication ; et
- réception (112), par ladite station de base audit au moins un créneau de communication alloué, d'un signal émis par ledit appareil cellulaire comprenant un identifiant dudit appareil cellulaire ;

ledit procédé (100) comprenant en outre un balayage temporel de ladite gamme de fréquences selon un plan de balayage, par un équipement de localisation d'appareils cellulaires ;
caractérisé en ce qu'il comprend une synchronisation (104) dudit plan de balayage et de chaque créneau de communication de sorte que l'équipement de localisation soit en écoute d'une bande de fréquence comprenant la fréquence de communication dudit créneau de communication à l'horaire de communication dudit créneau de communication.

Elle concerne également un système et une station de base comprenant des moyens configurés pour mettre en oeuvre ce procédé.

## Description

La présente invention concerne un procédé pour la caractérisation d'appareils cellulaires. Elle concerne également un système et une station de base comprenant des moyens configurés pour mettre en oeuvre ce procédé.

Le domaine de l'invention est de manière générale le domaine de la caractérisation d'émetteurs cellulaires, et en particulier en vue d'identifier et de localiser lesdits émetteurs cellulaires.

### État de la technique

Une station de base de communications cellulaires reçoit les connexions d'appareils de communication cellulaires, également appelés appareils utilisateurs ou appareil cellulaire, et noté « UE » (pour « user equipment ») dans la suite, qui se trouvent dans une zone géographique comprenant ladite station de base. Ainsi, la station de base peut identifier chaque appareil cellulaire, car ce dernier émet son identifiant pour se faire connaître de la station de base, en vue d'établir un canal de communication.

En résumé, lorsqu'un appareil cellulaire souhaite se connecter à une station de base, il émet tout d'abord une requête de connexion, par exemple un message RACH. En réponse, à cette requête de connexion, un planificateur de la station de base, également connu sous le nom de UE Scheduler, noté UES dans la suite, alloue audit appareil cellulaire un ou des créneaux de communication, appelés créneaux de communication de liaison, chaque créneau comprenant d'une part une fréquence de communication à utiliser et un horaire de communication. L'appareil cellulaire utilise alors ledit ou lesdits créneaux de communication de liaison pour émettre son identifiant et d'autres informations à la station de base qui en retour lui attribue un ou plusieurs canaux de communication que l'appareil cellulaire peut ensuite utiliser pour demander d'autres créneaux de communication cellulaire.

Il est en outre connu d'utiliser un équipement de localisation, tel qu'un goniomètre, pour localiser un appareil cellulaire, et en particulier déterminer la direction dudit appareil cellulaire, et sa localisation. Un tel appareil est en écoute/observation sur une bande de fréquence limitée. Lorsqu'il s'agit de couvrir toute une gamme de fréquence, par exemple la gamme des fréquences de communication cellulaire, l'équipement de localisation doit réaliser un balayage temporel de ladite gamme de fréquence, par bandes de fréquences, de manière séquentielle dans le temps.

Dans le cadre d'une communication cellulaire, du fait du fonctionnement décrit plus haut, il arrive souvent que l'appareil cellulaire communique avec la station de base en utilisant une fréquence qui n'est pas comprise dans la bande de fréquences écoutée à ce moment là par l'équipement de localisation, en particulier lors des créneaux de communication de liaison. Pour ces raisons, il arrive souvent que l'appareil cellulaire ne soit pas détecté ni mesuré par l'équipement de localisation.

Un but de la présente invention est de remédier à au moins un des inconvénients précités.

Un autre but de l'invention est de proposer une solution plus performante de caractérisation d'appareils cellulaires.

Un autre but de l'invention est de proposer une solution de caractérisation plus complète d'appareils cellulaires.

### Exposé de l'invention

L'invention propose d'atteindre au moins l'un des buts précités par un procédé de caractérisation d'appareils cellulaires pouvant fonctionner dans une gamme de fréquences définie commune avec une station de base, ledit procédé comprenant les étapes suivantes réalisées pour au moins un, en particulier chaque, appareil cellulaire souhaitant se connecter à ladite station de base :
- allocation, par un planificateur de ladite station de base audit appareil cellulaire, d'au moins un créneau de communication dédié, chaque créneau de communication comprenant un horaire de communication et une fréquence de communication ; et
- réception, par ladite station de base, audit au moins un créneau de communication alloué, d'un signal émis par ledit appareil cellulaire comprenant un identifiant dudit appareil cellulaire ;

ledit procédé comprenant en outre un balayage temporel, en bandes de fréquences, de ladite gamme de fréquences selon un plan de balayage, par un équipement de localisation d'appareils cellulaires ;
caractérisé en ce qu'il comprend une synchronisation dudit plan de balayage et de chaque créneau de communication de sorte que l'équipement de localisation soit en écoute d'une bande de fréquence comprenant la fréquence de communication dudit créneau de communication à l'horaire de communication de communication dudit créneau de communication.

L'invention propose donc une solution de caractérisation d'appareils cellulaires dans laquelle l'équipement de localisation est synchronisé avec le planificateur, également appelé UE scheduler, de sorte que chaque créneau de communication attribué à un appareil cellulaire souhaitant communiquer avec la station de base soient synchronisé avec l'instant et la bande de fréquence observés par l'équipement de localisation. Par conséquent, au moment où l'appareil cellulaire communique avec la station de base en utilisant la fréquence qui lui a été allouée par le planificateur, l'équipement de localisation écoute une bande de fréquence qui comprend ladite fréquence allouée : il est donc possible pour l'équipement de localisation de localiser ledit appareil cellulaire. De plus, étant donné que pour chaque créneau de communication, la fréquence allouée par le planificateur est à usage exclusif dudit appareil cellulaire et que l'appareil cellulaire émet son identifiant lors de ces créneaux de communication, il est possible d'identifier ledit appareil cellulaire, c'est-à-dire d'obtenir son identifiant et de corréler son identifiant avec la localisation déterminée par l'équipement de localisation. Ainsi, le procédé selon l'invention permet de réaliser une caractérisation, c'est-à-dire une identification et une localisation, de chaque appareil cellulaire souhaitant se connecter à la station de base, de manière performante et complète.

Par « appareil cellulaire » on entend un appareil de communication cellulaire. Sans perte de généralité, un tel appareil peut en particulier être un appareil utilisateur, par exemple un appareil de type téléphone mobile ou Smartphone ou encore tout type de modem cellulaire.

Par « communication cellulaire », on entend tout type de communication cellulaire, tel qu'un appel téléphonique, un chargement de données au travers du réseau cellulaire, etc. Suivant des exemples de réalisation non limitatifs, une communication cellulaire peut être une communication utilisant les normes 3GPP (ou d'autres organismes tels que UIT, ETSI, ARIB/TTC, CCSA, ATIS, TTA) de réseau cellulaire 2G (par exemple) GSM/GPRS, 3G (par exemple UMTS), 4G (par exemple LTE), 5G (par exemple NR), 6G, et les futures générations.

Suivant des modes de réalisation, l'équipement de localisation peut être asservi au planificateur de sorte que la bande de fréquence observée par ledit équipement de localisation est déterminée en fonction de l'au moins un créneau de communication attribué à l'appareil cellulaire.

Dans ce cas, chaque créneau de communication alloué par le planificateur est communiqué à l'équipement de localisation. Ce dernier ajuste, en temps et/ou en fréquence, son plan de balayage en fréquences de la gamme de fréquences, en fonction dudit créneau de communication.

Dans ce mode de réalisation, le planificateur peut être configuré pour allouer les créneaux de communication suivant une règle prédéterminée, pour simplifier la tâche de l'équipement de localisation pour adapter son plan de balayage. Par exemple, l'allocation des créneaux de communication peut être réalisée en le regroupant en temps et en fréquences, c'est-à-dire allouer des fréquences se trouvant dans une même bande de fréquence au même instant. Cela permet à l'équipement de localisation d'observer ladite bande audit instant et caractériser l'ensemble des appareils cellulaires auxquels lesdits créneaux ont été attribués.

Suivant des modes de réalisation, le planificateur peut être asservi à l'équipement de localisation de sorte que les créneaux de communication sont déterminés en fonction du plan de balayage.

Ce mode de réalisation est plus simple à mettre en oeuvre.

Suivant un exemple de réalisation, le plan de balayage de l'équipement de localisation peut être communiqué au planificateur : ce plan de balayage indique chaque bande fréquence observée par l'équipement de localisation et l'instant auquel ladite bande de fréquence est observée, ainsi que la durée pendant laquelle ladite bande est observée. Ainsi, le planificateur peut allouer un ou des créneaux de communication couverts par l'équipement de localisation en temps et en fréquence.

Procédé selon l'une quelconque des revendications, caractérisé en ce qu'il comprend en outre une étape de localisation de l'appareil cellulaire pour déterminer :
- une direction d'arrivée d'un signal émis par ledit appareil cellulaire ; et/ou
- une localisation dudit appareil cellulaire.

L'étape de localisation de l'appareil cellulaire est réalisée en fonction d'un ou des signaux émis par l'appareil cellulaire et captés, par l'équipement de localisation, lors de l'étape d'observation.

La détermination de la direction d'arrivée, et/ou de la localisation, sont des opérations connues de la personne du métier, par exemple dans le domaine de la goniométrie et ne seront donc pas décrites ici par soucis de concision.

L'équipement de localisation peut être positionné en tout emplacement, tant que ledit équipement localisation se trouve à une distance et dans une orientation pouvant recevoir le ou les signaux émis, par le ou les équipements cellulaires.

Suivant des modes de réalisation, l'équipement de localisation peut être local à la station de base, et en particulier disposé dans la station de base. Ce mode de réalisation permet un déploiement aisé de l'invention et une plus grande facilité d'intégration.

Suivant des modes de réalisation, l'équipement de localisation peut se trouver à distance de la station de base. Dans ce cas, le procédé selon l'invention comprend une communication entre l'équipement de localisation et ladite station de base, directement ou par l'intermédiaire d'au moins un autre équipement.

Ce mode de réalisation permet une plus grande liberté de déploiement de l'équipement de localisation.

Dans ces modes de réalisation, l'équipement de localisation peut être stationnaire, par exemple positionné sur un véhicule à l'arrêt, sur un mât, ou un immeuble, etc. ou tout autre moyen stationnaire pouvant accueillir ledit équipement de localisation.

Alternativement, l'équipement de localisation peut être mobile, par exemple positionné sur un satellite, un véhicule en mouvement, etc. Le véhicule en mouvement peut être un véhicule terrestre, un véhicule maritime, un véhicule volant, etc.

Suivant des modes de réalisation, la synchronisation entre le planificateur et l'équipement de localisation peut être réalisée grâce à un module de synchronisation en communication avec d'une part l'équipement de localisation et d'autre part le planificateur.

Dans ce cas, le module de synchronisation peut se présenter sous la forme d'un équipement indépendant du planificateur et de l'équipement de localisation.

Le module de synchronisation peut être local au planificateur et/ou à l'équipement de localisation, ou distant dudit planificateur et dudit équipement de localisation.

Par exemple, le module de synchronisation peut comprendre :
- un premier sous-module se trouvant du côté du planificateur, et
- un deuxième sous-module se trouvant du côté de l'équipement de localisation ;
participant à, ou réalisant, la communication entre, ou la synchronisation entre, ledit planificateur et ledit équipement de localisation.

Suivant des modes de réalisation, la synchronisation entre le planificateur et l'équipement de localisation peut être réalisée sans utilisation d'un autre équipement. Dans ce cas, le planificateur et l'équipement de localisation sont en communication l'un avec l'autre et mettent en oeuvre ladite synchronisation, par une configuration logicielle et/ou matérielle.

Suivant un autre aspect de la même invention, il est proposé un système de caractérisation d'appareils cellulaires pouvant communiquer avec une station de base, dans une gamme de fréquences définie, ledit système comprenant :
- une station de base comprenant :
   ▪un planificateur, et
   ▪un équipement d'identification ; et
- un équipement de localisation ;
configurés pour mettre en oeuvre le procédé selon l'invention.

Suivant une définition générale, le système selon l'invention peut comprendre, en termes de moyens techniques, l'une quelconque, ou une combinaison quelconque d'au moins deux, des caractéristiques optionnelles décrites plus haut en référence au procédé selon l'invention et qui ne sont pas reprises ici, par soucis de concision.

En particulier, le système selon l'invention peut en outre un module de synchronisation de l'équipement de localisation et du planificateur.

Le module de synchronisation peut être positionné dans la station de base ou être distant de la station de base.

Le module de synchronisation peut être positionné localement à l'appareil de localisation, ou être distant dudit appareil de localisation.

Suivant des modes de réalisation, l'équipement de localisation peut être distant de la station de base.

Alternativement, l'équipement de localisation peut être local à la station de base, et en particulier être disposé dans ladite station de base, et encore plus particulièrement être intégré dans ladite station de base.

L'équipement de localisation peut être configuré pour déterminer une direction d'arrivée et/ou une localisation d'un, ou de chaque, appareil cellulaire à partir de mesure(s) radiofréquence(s).

L'équipement de localisation peut être tout type d'équipement de localisation.

Par exemple, l'équipement de localisation peut comprendre, ou peut consister en, un goniomètre.

La station de base peut être un élément d'un réseau de stations de base, par exemple d'un opérateur mobile ou d'un opérateur privé.

Alternativement, la station de base peut être un équipement isolé avec comme seul objectif l'identification des appareils cellulaires environnants.

Suivant un autre aspect de la même invention, il est proposé une station de base comprenant :
▪ au moins un planificateur,
▪ au moins un équipement d'identification ;
▪ au moins un équipement de localisation ;
configurés pour mettre en oeuvre le procédé selon l'invention.

Suivant une définition générale, la station de base selon l'invention peut comprendre, en termes de moyens techniques, l'une quelconque, ou une combinaison quelconque d'au moins deux, des caractéristiques optionnelles décrites plus haut en référence au procédé selon l'invention et qui ne sont pas reprises ici en détail par soucis de concision.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé ; et
- la FIGURE 2 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle, sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

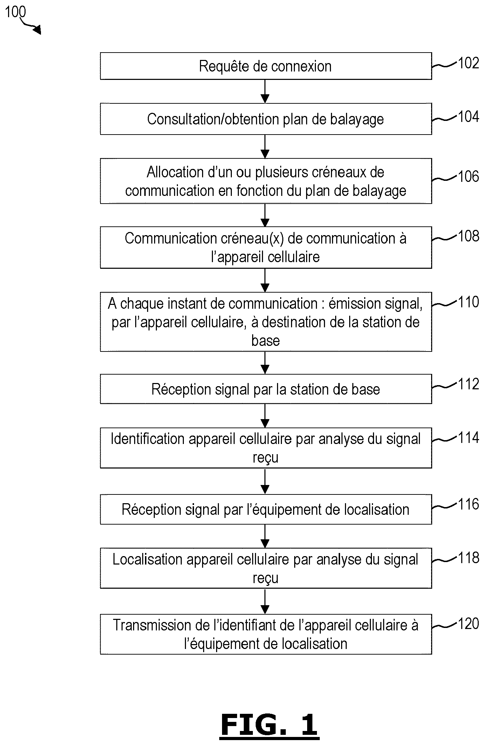

La FIGURE 1 est une représentation schématique d'un exemple de réalisation non limitatif d'un procédé selon l'invention.

Le procédé 100 de la FIGURE 1 peut être utilisé pour caractériser les appareils cellulaires se trouvant dans une zone géographique donnée, et en particulier des appareils cellulaires qui souhaitent se connecter à une station de base.

Les appareils cellulaires peuvent être de tout type, tels que par exemple des téléphones, des Smartphone, des SmartWatch, des tablettes, des modems cellulaires, etc. et de manière générale tout appareil de communication cellulaire pouvant se connecter à une station de base et établir une communication cellulaire selon l'une quelconque des normes de communication cellulaire connues ou à venir.

Le procédé 100 comprend une étape 102 lors de laquelle un appareil cellulaire envoie une requête de connexion à une station de base. Cette requête permet à l'appareil cellulaire de signaler sa présence à la station de base et lui indiquer son souhait de s'y connecter en vue par exemple d'établir une communication cellulaire.

En particulier, cette requête peut se présenter sous la forme d'un message construit de manière identique pour tous les appareils cellulaires, avec un numéro aléatoire choisi par chaque appareil cellulaire.

Ce message est reçu sur un canal dédié au niveau de la station de base.

En réponse à cette requête la station de base va fournir à l'appareil cellulaire un ou plusieurs créneaux de communication dédiés afin de réaliser une communication sans être perturbée par d'autres communications cellulaires. Cela permet à de nombreux appareils cellulaires de communiquer avec la station de base tout en évitant les collisions dans les communications radio entre lesdits appareils cellulaires.

Lors d'une étape 104, le planificateur de la station de base consulte un plan de balayage d'un équipement de localisation d'appareils cellulaire. Ce plan de balayage indique au planificateur, pour chaque bande de fréquences observée par ledit équipement de localisation, l'instant et la durée pendant lesquels ledit équipement de localisation observe ladite bande de fréquences.

Ce plan de balayage est préalablement communiqué audit planificateur, ou à la station de base, et mémorisé en local. Alternativement, le planificateur obtient ledit plan de balayage auprès de l'équipement de localisation ou d'un autre équipement détenant ledit plan de balayage.

Lors d'une étape 106, en fonction du plan de balayage, le planificateur alloue à l'appareil cellulaire un ou plusieurs créneaux de communication. Chaque créneau de communication comprend :
- une fréquence de communication, et
- un instant/horaire de communication.

Pour au moins un, en particulier chaque, créneau de communication, la fréquence de communication est choisie de sorte qu'à l'instant de communication dudit créneau de communication ladite fréquence de communication se trouve dans une/la bande de fréquence observée par l'équipement de localisation.

Comme indiqué plus haut, plusieurs créneaux de communication peuvent avoir la même fréquence de communication : dans ce cas, ces créneaux de communication ont des horaires de communication différents. En d'autres termes, ces créneaux de communication utilisent la même fréquence de communication à des horaires différents.

Alternativement, ou en plus, plusieurs créneaux de communication peuvent avoir un même horaire de communication : dans ce cas ces créneaux de communication ont des fréquences de communications différentes. En d'autres termes, ces créneaux de communication utilisent des fréquences différentes au même instant/horaire de communication.

Lors d'une étape 108, le ou les créneaux de communication sont communiqués à l'appareil cellulaire.

Ensuite, lors d'une étape 110, réalisée l'instant ou aux instants de communication indiqués dans le ou les créneaux de communication, l'appareil cellulaire émet au moins un signal pour transmettre à la station de base son identifiant, et éventuellement d'autres données, par exemple des données indiquant la nature de la communication cellulaire qu'il souhaite établir.

L'au moins un signal émis par l'appareil cellulaire est reçu par la station de base lors d'une étape 112.

Lors d'une étape 114, cet au moins un signal est traité et l'identifiant de l'appareil cellulaire, ID, est extrait, par exemple par un équipement d'identification de la station de base.

L'appareil cellulaire est donc identifié.

Lors d'une étape 116, réalisée en même temps, ou sensiblement en même temps, que l'étape 112, l'au moins un signal émis par l'appareil cellulaire à l'étape 110 est en outre reçu par l'équipement de localisation.

Cet au moins un signal est traité, lors d'une étape 118, par l'équipement de localisation pour déterminer la direction d'arrivée dudit signal, noté DoA, et/ou la localisation de l'appareil cellulaire, notée LOC, selon des techniques connues.

Ainsi, l'appareil cellulaire est localisé.

Lors d'une étape 120 optionnelle, l'identifiant ID de l'appareil cellulaire, déterminé au niveau de la station de base à l'étape 114, est communiqué à l'équipement de localisation. Ainsi, l'équipement de localisation connait l'identifiant de l'appareil cellulaire et sa localisation.

Alternativement, ou en plus, l'identifiant ID de l'appareil cellulaire, et au moins une des données de localisation DoA et/ou LOC peuvent être communiquées, à un équipement externe.

Dans l'exemple de la FIGURE 1, l'au moins un créneau de communication est choisi en fonction du balayage réalisé par l'équipement de localisation.

Suivant une alternative non représentée, l'au moins un créneau de communication peut être choisi librement par le planificateur et c'est le balayage réalisé par l'équipement de localisation qui peut être adapté audit au moins un créneau de communication alloué à l'équipement de localisation.

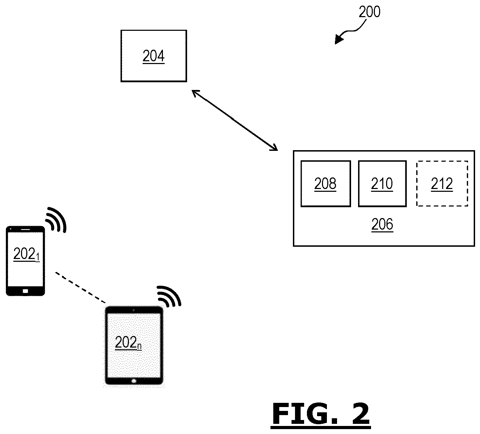

La FIGURE 2 est une représentation schématique d'un exemple de réalisation non limitatif d'un système selon la présente invention.

Le système 200 de la FIGURE 2 peut être utilisé pour mettre en oeuvre un procédé selon l'invention, et en particulier le procédé 100 de la FIGURE 1.

Le système 200 peut être utilisé pour caractériser des appareils cellulaires 202₁-202ₙ se trouvant dans une zone géographique donnée, et en particulier des appareils cellulaires 202₁-202ₙ qui souhaitent se connecter à une station de de base.

Chaque appareil cellulaire 202ᵢ peut être de tout type, tel que par exemple un téléphone, un Smartphone, un SmartWatch, une tablette, un modem cellulaire, etc. et de manière générale tout appareil pouvant se connecter à une station de base et établir une communication cellulaire selon l'une quelconque des normes de communication cellulaire connues ou à venir.

Le système 200 comprend un équipement de localisation 204. L'équipement de localisation peut par exemple être un goniomètre.

L'équipement de localisation 204 peut être stationnaire. L'équipement de localisation 204 peut être disposé sur un véhicule, et en particulier dans/sur un aéronef.

L'équipement de localisation 204 a pour fonction d'analyser au moins un signal émis par un appareil cellulaire et déterminer la localisation dudit appareil cellulaire, et en particulier la direction d'arrivé du signal et/ou la localisation de l'appareil cellulaire.

L'équipement de localisation 204 est en particulier configuré pour réaliser les étapes 116 à 120 du procédé

De manière connue, pour localiser des appareils cellulaires pouvant communiquer dans une gamme de fréquence, l'équipement de localisation 204 est configuré pour réaliser un balayage temporel de la gamme de fréquences, par bandes de fréquences, en écoutant une bande de fréquence à la fois.

Le système peut en outre comprendre, une station de base 206.

La station de base 206 peut être une station de base classique, connue de la personne du métier.

La station de base 206 peut être stationnaire ou mobile.

La station de base 206 comprend un planificateur 208 qui a pour fonction d'attribuer, à chaque appareil cellulaire 202ᵢ souhaitant se connecter à la station de base, un ou plusieurs créneaux de communication. Ce ou ces créneaux de communication sont déterminés et alloués suite à la réception d'une requête de communication reçue de la part de l'appareil cellulaire 202ᵢ.

Comme indiqué plus haut, le ou les créneaux de communication peuvent être déterminés en fonction d'un plan de balayage de l'équipement de localisation 204. Dans ce cas, le planificateur 208 peut en particulier être configuré pour réaliser les étapes 104-108.

Alternativement, le ou les créneaux de communication peuvent être déterminés librement par le planificateur 208 et c'est l'appareil de localisation 204 qui détermine/modifie/adapte son plan de balayage en fonction du ou des créneaux de communication qui lui sont communiqués.

Le planificateur 208 peut être un module matériel, tel qu'un processeur, une puce électronique, etc. Alternativement, le planificateur peut être un module logiciel, tel qu'un programme d'ordinateur. Suivant encore une autre alternative, le planificateur peut être une combinaison d'au moins un module logiciel et d'au moins un module matériel.

La station de base 206 peut en outre comprendre un équipement 210 d'identification de l'appareil cellulaire 202ᵢ en fonction d'un signal reçu dudit appareil cellulaire au(x) créneau(x) de communication qui lui a(ont) été attribué(s).

En particulier, l'équipement d'identification 210 peut être configuré pour réaliser l'étape 114 du procédé 100 de la FIGURE 1.

L'équipement d'identification 210 peut être un module matériel, tel qu'un processeur, une puce électronique, etc. Alternativement, l'équipement d'identification 210 peut être un module logiciel, tel qu'un programme d'ordinateur. Suivant encore une autre alternative, l'équipement d'identification 210 peut être une combinaison d'au moins un module logiciel et d'au moins un module matériel.

De manière optionnelle, le système 200 peut en outre comprendre un module 212 de synchronisation du planificateur 208 avec l'équipement de localisation 204. Ce module de synchronisation 212 est optionnel car le planificateur 208 avec l'équipement de localisation 204 peuvent communiquer ensemble, sans l'intervention d'un tel module de synchronisation 212, pour se synchroniser.

Bien entendu l'invention n'est pas limitée aux exemples qui viennent d'être décrits.

## Revendications

1. Procédé (100) de caractérisation d'appareils cellulaires (202₁-202ₙ) pouvant fonctionner dans une gamme de fréquences définie commune avec une station de base (206), ledit procédé (100) comprenant les étapes suivantes réalisées pour au moins un, en particulier chaque, appareil cellulaire (202₁-202ₙ) souhaitant se connecter à ladite station de base (206) :
- allocation (106), par un planificateur (208) de ladite station de base (206) audit appareil cellulaire (202₁-202ₙ), d'au moins un créneau de communication dédié, chaque créneau de communication comprenant un horaire de communication et une fréquence de communication ; et
- réception (112), par ladite station de base (206) audit au moins un créneau de communication alloué, d'un signal émis par ledit appareil cellulaire (202₁-202ₙ) comprenant un identifiant dudit appareil cellulaire ;
ledit procédé (100) comprenant en outre un balayage temporel, en bandes de fréquences, de ladite gamme de fréquences selon un plan de balayage, par un équipement de localisation (204) d'appareils cellulaires (202₁-202ₙ) ; **caractérisé en ce qu'**il comprend une synchronisation (104) dudit plan de balayage et de chaque créneau de communication de sorte que l'équipement de localisation (204) soit en écoute d'une bande de fréquence comprenant la fréquence de communication dudit créneau de communication à l'horaire de communication dudit créneau de communication.

2. Procédé (100) selon la revendication précédente, **caractérisé en ce que** l'équipement de localisation (204) est asservi au planificateur (208) de sorte que la bande de fréquence observée par ledit équipement de localisation (204) est déterminée en fonction de l'au moins un créneau de communication attribué à l'appareil cellulaire (202₁-202ₙ).

3. Procédé (100) selon la revendication 1, **caractérisé en ce que** le planificateur (208) est asservi à l'équipement de localisation (204) de sorte que l'au moins un créneau de communication est déterminé en fonction du plan de balayage.

4. Procédé (100) selon l'une quelconque des revendications, **caractérisé en ce qu'**il comprend en outre une étape (118) de localisation de l'appareil cellulaire (202₁-202ₙ) pour déterminer :
- une direction d'arrivée d'un signal émis par ledit appareil cellulaire (202₁-202ₙ) ; et/ou
- une localisation dudit appareil cellulaire (202₁-202ₙ).

5. Procédé (100) selon l'une quelconque des revendications, **caractérisé en ce que** l'équipement de localisation (204) se trouve à distance de la station de base (206), ledit procédé (100) comprenant en outre une communication entre l'équipement de localisation (204) et ladite station de base (206).

6. Procédé (100) selon l'une quelconque des revendications, **caractérisé en ce que** la synchronisation est mise en oeuvre par un module de synchronisation (212) en communication avec d'une part l'équipement de localisation (204) et d'autre part le planificateur (208).

7. Système (200) de caractérisation d'appareils cellulaires (202₁-202ₙ) pouvant communiquer avec une station de base (206), dans une gamme de fréquences définie, ledit système (200) comprenant :
- une station de base (206) comprenant :
▪un planificateur (208), et
▪un équipement d'identification (210) ; et
- un équipement de localisation (204) ;
configurés pour mettre en oeuvre le procédé (100) selon l'une quelconque des revendications précédentes.

8. Système (200) selon la revendication précédente, **caractérisé en ce qu'**il comprend en outre un module de synchronisation (212) de l'équipement de localisation (204) et du planificateur (208).

9. Système (200) selon la revendication précédente, **caractérisé en ce que** l'équipement de localisation (204) est distant de la station de base (206).

10. Système selon l'une quelconque des revendications 7 ou 8, **caractérisé en ce que** l'équipement de localisation (204) est local à la station de base (206), et en particulier intégré dans la station de base (206).

11. Système (200) selon la revendication précédente, **caractérisé en ce que** l'équipement de localisation (204) est configuré pour déterminer une direction d'arrivée et/ou une localisation d'un appareil cellulaire (202₁-202ₙ), à partir de mesure(s) radiofréquence(s).

12. Système (200) selon l'une quelconque des revendications précédentes, **caractérisé en ce que** l'équipement de localisation (204) comprend, ou consiste en, un goniomètre.

13. Station de base comprenant :
▪au moins un planificateur (208),
▪au moins un équipement d'identification (210) ; et
▪au moins un équipement de localisation (204) ;
configurés pour mettre en oeuvre le procédé (100) selon l'une quelconque des revendications 1 à 6.
